Europäisches Patentamt

European Patent Office

Office européen des brevets

(19)

(11) EP 0 794 363 A1

(12) **DEMANDE DE BREVET EUROPEEN**

(43) Date de publication:
10.09.1997 Bulletin 1997/37

(51) Int Cl.6: **F16H 61/24**, F16H 61/32

(21) Numéro de dépôt: 97420036.2

(22) Date de dépôt: 06.03.1997

(84) Etats contractants désignés:
DE DK ES GB IE IT NL PT SE

(30) Priorité: 08.03.1996 FR 9603193

(71) Demandeur: ADWEST OCI SA
42350 La Talaudière (FR)

(72) Inventeur: Gaillard, Jean
42100 Saint Etienne (FR)

(74) Mandataire: Thivillier, Patrick et al
Cabinet Laurent & Charras,
3 Place de l'Hôtel de Ville,
B.P. 203
42005 Saint-Etienne Cédex (FR)

(54) **Dispositif de filtration des efforts parasites d'un levier de commande d'une boîte de vitesses d'un véhicule automobile**

(57) Le dispositif de filtration comprend en combinaison :

- un ensemble (E) apte à créer un effort résistant pour la manoeuvre du levier (L) correspondant au passage et/ ou à la sélection des vitesses,

- un ensemble (E1) apte à créer une assistance pour le passage et/ou la sélection des vitesses, proportionnelle aux efforts appliqués par le conducteur sur le levier (L).

FIG.2

## Description

L'invention se rattache au secteur technique des accessoires pour véhicules automobiles, notamment des boîtes de vitesses.

Plus particulièrement, l'invention s'applique à tous types de boîtes de vitesses à commande manuelle, au moyen d'un levier agencé pour agir sur un système de commande à barre ou à câbles pour le passage et la sélection des vitesses, en combinaison avec des éléments de renvoi et autres, coopérant avec des parties déterminées de la boîte de vitesses. Un effort provoqué sur le levier, notamment sur le pommeau qui équipe généralement ce type de levier, provoque le déplacement du système de commande.

Afin de réduire les efforts appliqués sur le levier correspondant aux passages des vitesses, la liaison du levier avec le système de commande, s'effectue par une démultiplication appropriée. Cette démultiplication engendre une course de débattement du levier relativement importante. Il est donc apparu important de pouvoir diminuer la course du levier de commande et sa longueur, en ayant pour objectif de maîtriser le plus possible cette course.

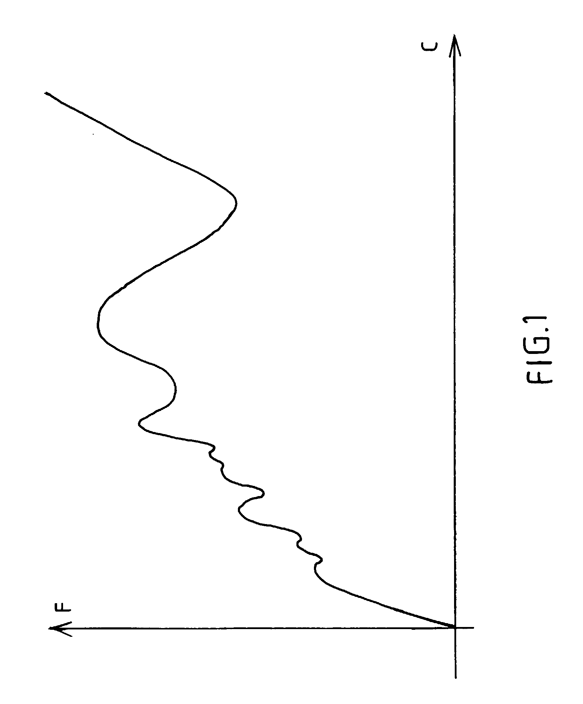

On a également constaté que lors du passage des vitesses, apparait un certain parasitage, qui a lieu pendant la course du levier, générant des fluctuations au niveau des efforts à appliquer sur le levier. On renvoie à la figure 1, qui montre la courbe d'efforts appliqués sur le levier, en fonction de la course de ce dernier.

Ce parasitage est provoqué essentiellement par le système mécanique intervenant à l'intérieur de la boîte, pour les différentes commandes des passages de vitesses, mais également à cause des différents frottements au niveau des différentes liaisons.

Le problème posé est donc de diminuer voir d'éliminer tous les efforts parasites engendrés par les systèmes de commande interne des boîtes de vitesses, en ayant pour objectif de marquer de façon nette et de façon douce, chacune des positions au niveau du levier. Pour diminuer ces parasites, des études faites par le demandeur ont montré qu'il convenait de créer un effort résistant supplémentaire en un point quelconque du système de commande de la boîte de vitesses ou directement à l'intérieur de cette dernière.

On conçoit cependant que cette solution a pour conséquence d'augmenter l'effort appliqué sur le levier, rendant difficile le passage des vitesses.

Le problème que se propose de résoudre l'invention, est donc de pouvoir concilier cette antinomie qui est de créer un effort résistant supplémentaire sans pour autant être obligé d'augmenter l'effort appliqué sur le levier. Autrement dit, le problème que se propose de résoudre l'invention est d'obtenir des efforts peu importants sur le levier, avec des points de passage marqués et filtrés de l'essentiel des parasites.

Pour résoudre un tel problème, il a été conçu et mis au point un dispositif de filtration des efforts parasites d'un levier de commande d'une boîte de vitesses, le dispositif comprenant en combinaison :

- un ensemble apte à créer un effort résistant pour la manoeuvre du levier correspondant au passage et/ou à la sélection des vitesses,
- un ensemble apte à créer une assistance pour le passage et/ou la sélection des vitesses, proportionnelle aux efforts appliqués par le conducteur sur le levier.

Plus particulièrement, pour résoudre le problème posé de diminuer les efforts parasites, l'ensemble apte à créer l'effort résistant, est constitué par des moyens mécaniques montés en combinaison avec les éléments de la chaîne cinématique de passage et de sélection des vitesses.

Dans une autre forme de réalisation, l'ensemble apte à créer l'effort résistant, est constitué par des moyens mécaniques montés en combinaison avec des éléments intégrés dans la boîte de vitesses.

Dans le cas où l'ensemble apte à créer l'effort résistant est monté en combinaison avec les éléments de la chaîne cinématique de la boîte de vitesse, les moyens mécaniques sont constitués par une came coopérant avec au moins une bille de mesure en pression, la came étant rendue solidaire avec une position angulaire fixe, de l'un des éléments mobiles de la chaîne cinématique tandis que la bille de pression est assujetti à un organe support monté avec une position angulaire fixe.

La came est solidaire d'un élément de renvoi relié aux moyens de commande de la boîte de vitesses actionnée par le levier, ledit élément de renvoi étant accouplé à une partie de la boîte de vitesses pour le passage et la sélection des vitesses.

Dans le cas où l'ensemble apte à créer l'effort résistant est intégré dans la boîte de vitesses, les moyens mécaniques sont constitués par les axes crantés de commande des fourchettes correspondant au passage des vitesses, les crans des axes coopérant avec un système de galets ou de billes apte à exercer un effort de pression réglable au moyen de ressorts notamment.

Pour résoudre le problème posé de compenser l'effort résistant créé pour filtrer les efforts parasites, l'ensemble d'assistance comprend en combinaison :

- un moyen apte à mesurer l'effort appliqué digitalement sur une partie du levier et correspondant à la sélection et/ou au passage d'une vitesse,
- un système apte à délivrer un signal électrique proportionnel à l'effort appliqué, pour commander un organe actionneur accouplé à au moins un élément de la chaîne cinématique de sélection et/ou de passage des vitesses.

Pour résoudre le problème posé de tenir compte de la force exercée par le conducteur sur le levier, le moyen de mesure de l'effort appliqué est constitué par un capteur de forces, disposé soit au niveau du pommeau du levier de commande, soit au niveau de la tige du levier de commande et plus généralement entre le pommeau et l'organe actionneur.

Un autre problème que se propose de résoudre l'invention, est d'obtenir une assistance qui soit instantanée, c'est-à-dire que cette assistance cesse immédiatement lorsque le levier n'est plus soumis à un effort.

Pour résoudre un tel problème, l'ensemble est constitué par un circuit amplificateur, alimenté par une source d'énergie électrique extérieure, et assujetti au capteur, le signal délivré par ledit circuit amplificateur étant appliqué à l'organe actionneur. La source d'énergie électrique extérieure est constituée par la batterie du véhicule.

Avantageusement, l'organe actionneur est un moteur.

Dans une forme de réalisation, le moteur est accouplé par un système de transmission à l'élément de renvoi relié aux moyens de commande de la boîte de vitesses actionnés par le levier.

L'invention est exposée, ci-après plus en détail à l'aide des dessins annexés, dans lesquels :

La figure 1 est une vue de la courbe des efforts appliqués ( F) sur le levier, en fonction de la course (C) de ce dernier, cette courbe montrant schématiquement les irrégularités lors de la course de passage.

La figure 2 est une vue en plan à caractère schématique d'un exemple de réalisation nullement limitatif du dispositif selon l'invention.

La figure 3 est une vue partielle à plus grande échelle d'une autre forme de réalisation des moyens mécaniques aptes à créer l'effort résistant, dans le cas d'une intégration à la boîte de vitesses.

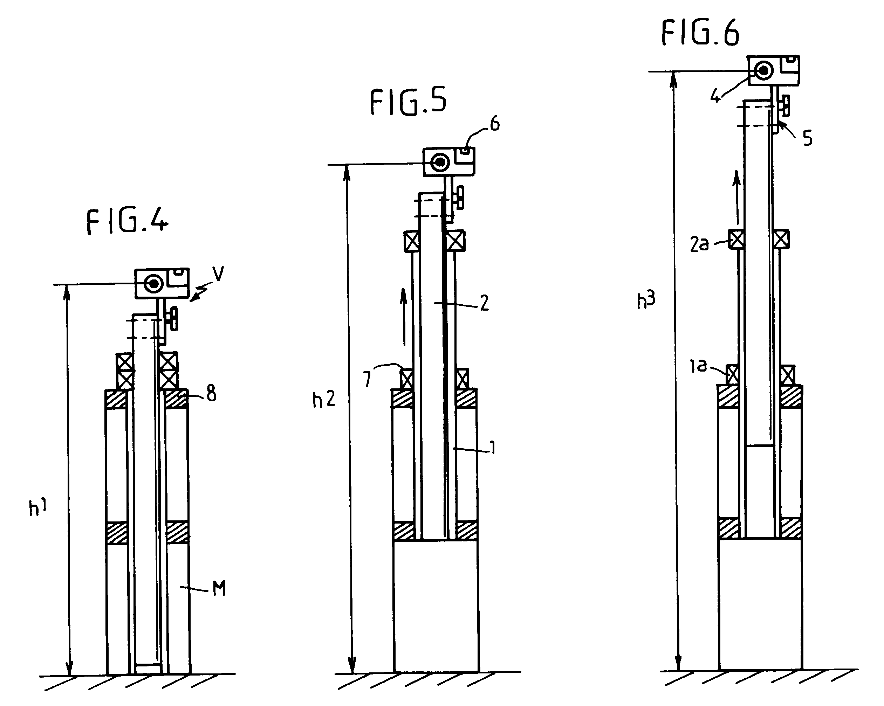

La figure 4 est une vue montrant le synoptique du principe d'assistance du levier de vitesses.

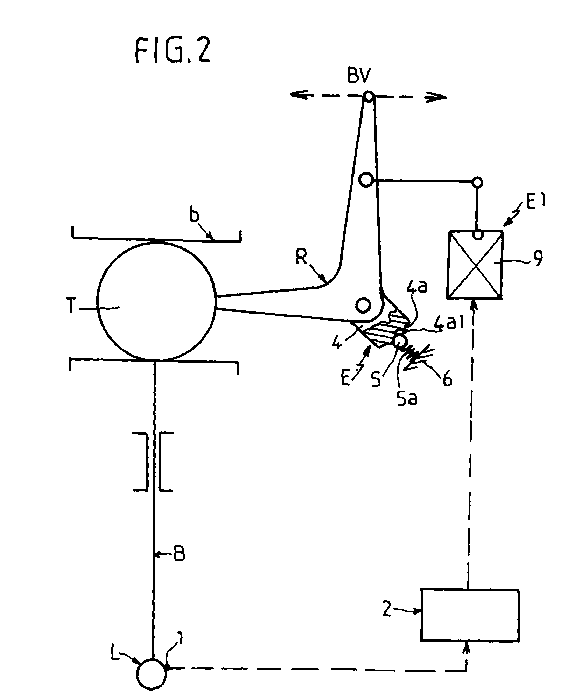

Pour une meilleure compréhension de la suite de la description, on a illustré, figure 2, un schéma de principe de fonctionnement d'une commande de boîtes de vitesses (BV), du type monobarre. Il est bien entendu, sans pour cela sortir du cadre de l'invention, que le dispositif s'applique à tous types de commande pour le passage et/ou la sélection des vitesses, c'est-à-dire que le dispositif s'applique indifféremment pour des commandes à barre ou à câbles.

Dans l'exemple de la figure 2, le pied du levier de vitesses (L) est accouplé par tous systèmes connus de démultiplication, à une barre (B), dont l'autre extrémité est solidaire d'une bague transversale (b) dans laquelle est montée, avec capacité de déplacement, une tête sphérique (T) solidaire d'un élément de renvoi (R).

L'élément de renvoi (R) est relié par biellettes ou autres, à une partie de la boîte, pour assurer le passage des vitesses. Généralement, l'élément de renvoi est monté avec capacité de déplacement angulaire limité, par rapport à un axe de rotation (A).

Selon l'invention, et comme déjà indiqué, pour éliminer l'essentiel des parasites engendrés par les systèmes de commande internes de la boîte de vitesses, d'une part, et de marquer de façon nette et douce chaque position au niveau du levier, d'autre part, il convient de créer un effort résistant supplémentaire au niveau de la cinématique de commande la boîte de vitesses. Cet effort peut être appliqué en un point quelconque du système de commande.

Dans ces conditions, certains des éléments de la commande de la boîte de vitesses sont montés en combinaison avec un ensemble (E) apte à créer cet effort résistant. Cet ensemble est constitué de moyens mécaniques comprenant une came (4) coopérant avec au moins un système de billes (5) de mise en pression. La came (4) est solidaire avec une position angulaire fixe, de l'élément de renvoi (R), par exemple. La bille de pression (5) est assujettie à un organe support (6) monté avec une position angulaire fixe sur une partie du véhicule. Le ou les profils (4a) de la came (4) sont déterminés en fonction des courses de passage et des efforts que l'on souhaite exercer pour procéder au passage des vitesses.

Par exemple, ce profil en came (4a) peut être constitué par une empreinte en creux (4a1) prolongée de part et d'autre par deux faces inclinées. En position "point mort" du levier de vitesse, la bille (5) est engagée dans l'empreinte en creux (4a1) en y étant maintenue en pression sous l'effet d'un ressort (5a) par exemple. Il est donc clair que pour dégager la bille (5) de son empreinte, il conviendra d'exercer sur le levier de commande (L), un effort supplémentaire pour permettre le pivotement de l'élément de renvoi autour de son axe (A) pour le passage de la vitesse souhaitée.

Le but recherché, à savoir la création d'un effort résistant supplémentaire, est donc bien atteint.

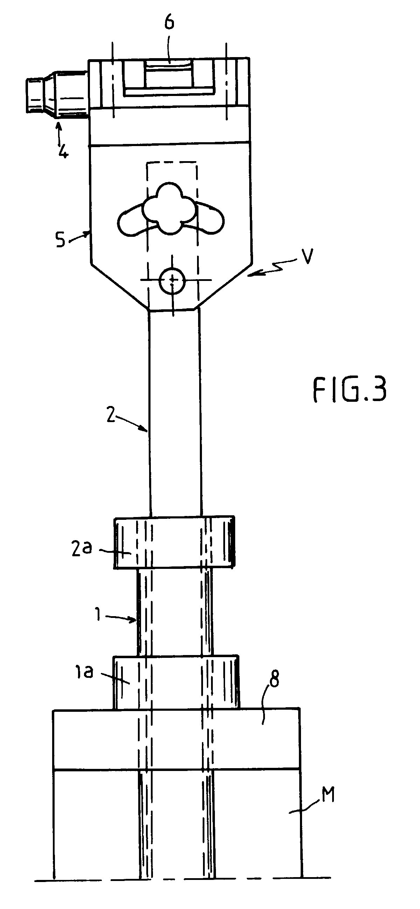

Comme indiqué, l'ensemble (E) apte à créer cet effort résistant, peut être intégré dans la boîte de vitesses. Dans ce cas, il peut être avantageux d'utiliser les axes (7) de commande des fourchettes (non représentées), correspondant au passage des vitesses. Ces axes (7) sont équipées de crans (7a) coopérant avec un système de galets ou de bille (8) aptes à exercer un effort de pression réglable, en combinaison avec des ressorts (10) (figure 3), sans pour cela exclure d'autres systèmes.

On rappelle, que chaque axe (7) commandé par les fourchettes, correspond respectivement au passage des couples de vitesses entre généralement la "1ère et la 2ème", la "3ème et la 4ème" et la "5ème et la marche arrière" (ou la 6ème). L'augmentation des efforts sur chacun des axes, en modifiant le tarrage des ressorts ou en modifiant le profil des crans (7a), permet d'adapter la filtration des efforts à chaque passage de vitesses, d'une manière séparée et non plus d'une manière globale.

Eu égard à l'effort résistant supplémentaire qui est créé par l'ensemble (E), il convient de combiner celui-ci avec un ensemble (E1) apte à créer une assistance pour le passage et/ou la sélection des vitesses, proportionnelle aux efforts appliqués par le conducteur sur le levier.

Dans ce but, l'ensemble (E1) comprend un moyen sous forme d'un capteur de forces (1), apte à mesurer l'effort appliqué digitalement sur une partie du levier (L) et correspondant à la sélection et/ou au passage d'une vitesse. Le capteur de force (1), de tous types connus et appropriés, est disposé, soit au niveau du pommeau du levier de commande (L), soit au niveau de la tige du levier de commande (L). Ce capteur est monté en combinaison avec un ensemble apte à délivrer un signal électrique proportionnel à l'effort appliqué, pour commander au moins un organe actionneur (9) accouplé à au moins l'un des éléments de la chaîne cinématique de sélection et/ou de passage des vitesses.

L'effort appliqué sur le levier (L), est donc transformé en signal électrique. Dans ce but, l'ensemble est constitué par un circuit amplificateur (2), alimenté par une source d'énergie extérieure (3), ledit circuit (2) étant assujetti au capteur (1). Le signal électrique délivré par le circuit (2), est appliqué à l'organe actionneur (9) qui est disposé entre le capteur (1) et la boîte de vitesses (BV).

Avantageusement, la source d'énergie (3) est constituée directement par la batterie du véhicule.

L'organe actionneur (9) est constitué par un moteur accouplé par tous moyens connus et appropriés, à un élément de la chaîne cinématique de la commande de la boîte de vitesses. Par exemple, comme le montre la figure 2, le moteur (9) est accouplé par un système de transmission, à l'élément de renvoi (R). Plus particulièrement, le moteur (9) est accouplé à l'élément de renvoi (R), pour l'entrainer angulairement, d'une manière concomitante, dans un sens ou dans l'autre.

Le système de transmission entre le moteur (9) et l'élément de renvoi (R) par exemple, est fonction notamment du positionnement dudit moteur, de sorte que cette transmission peut être linéaire ou rotatoire.

Il apparait donc que le signal électrique amplifié, issu du circuit (2), est appliqué au moteur (9) afin de transformer le courant, en un effort physique appliqué sur une partie de la commande de la boîte de vitesses. Dans ces conditions, les forces appliquées au niveau de l'élément concerné de la boîte de vitesses, résultent de la somme de l'effort de commande du conducteur appliqué sur le levier (L), et de l'effort fourni par le moteur (9).

L'assistance obtenue est donc proportionnelle à l'effort appliqué sur le levier de commande, étant donné que le capteur, alimenté sous une tension fixe (celle de la batterie), délivre un signal de sortie directement proportionnel audit effort. A noter également que cette proportionnalité peut être réglable en modifiant la valeur du gain de l'amplificateur.

Compte-tenu des caractéristiques du dispositif selon l'invention, il en résulte que plus l'effort résistant sera important, plus les efforts parasites seront minimisés, en combinaison avec l'ensemble d'assistance au niveau des efforts exercés sur le levier de commande pour le passage ou la sélection des vitesses.

Pour illustrer les résultats avantageux obtenus, on donne, ci-après, à titre indicatif nullement limitatif, une application numérique, en considérant la formule ci-après :

$$\Delta' = \frac{\Delta \times F'_1}{N + F_1}$$

formule dans laquelle :

$F_1$ = force réellement exercée sur le levier
$F'_1$ = force exercée sur le levier avec assistance
$\Delta$ = écart entre le pic et le creux de la courbe réelle sans assistance
$\Delta'$ = écart entre le pic et le creux de la courbe réelle avec assistance
N= effort résistant supplémentaire

Soit les valeurs :

$\Delta$ = 0,68
$F_1$ = 3,2 daN
$F'_1$ = 1,55 daN

en appliquant la formule précédente, on obtient pour :

N = 0 daN une valeur de $\Delta'$ de 0,32
N = 5 daN une valeur de $\Delta'$ de 0,13
N = 20 daN une valeur de $\Delta'$ de 0,045

Tous les efforts sont ramenés au niveau du pommeau.

On voit bien que les irrégularités $\Delta'$ sont inversement proportionnelles à la valeur de l'effort résistant N.

Les avantages ressortent bien de la description, en particulier on souligne et on rappelle :

- la suppression, ou tout au moins l'atténuation importante, des efforts parasites lors du passage des vitesses, tout en diminuant l'effort appliqué par le conducteur sur le levier,
- la possibilité de bien marquer chaque position du levier de vitesses, de manière à obtenir des passages nets,
- la facilité de régler l'effort résistant, en modifiant le profil de la came ou la pression exercée au niveau de la bille,
- la facilité de mise en oeuvre,
- la possibilité d'intégrer l'ensemble apte à créer l'effort résistant dans la boîte de vitesses,
- la proportionnalité de l'assistance en fonction de l'effort appliqué sur le levier de commande,
- la fiabilité et l'efficacité des résultats obtenus.

**Revendications**

1. Dispositif de filtration des efforts parasites d'un levier de commande d'une boîte de vitesses d'un véhicule automobile, ledit levier étant relié à la boîte par un système de commande pour le passage et/ou la sélection des vitesses, caractérisé en ce qu'il comprend en combinaison :

   - un ensemble (E) apte à créer un effort résistant pour la manoeuvre du levier (L) correspondant au passage et/ou à la sélection des vitesses,
   - un ensemble (E1) apte à créer une assistance pour le passage et/ou la sélection des vitesses, proportionnelle aux efforts appliqués par le conducteur sur le levier (L).

2. Dispositif selon la revendication 1, caractérisé en ce que l'ensemble (E) apte à créer l'effort résistant est constitué par des moyens (4) (5) (6) montés en combinaison avec des éléments (R) de la chaîne cinématique de passage et de sélection des vitesses.

3. Dispositif selon la revendication 1, caractérisé en ce que l'ensemble (E) apte à créer l'effort résistant est constitué par des moyens (8) (9) montés en combinaison avec des éléments (7) intégrés dans la boîte de vitesses.

4. Dispositif selon la revendication 2, caractérisé en ce que les moyens sont constitués par une came (4) coopérant avec au moins un système de billes (5) de mise en pression, la came étant rendue solidaire avec une position angulaire fixe, de l'un des éléments mobiles (R) de la chaîne cinématique tandis que la bille de pression (5) est assujettie à un organe support (6) monté avec une position angulaire fixe.

5. Dispositif selon la revendication 4, caractérisé en ce que la came (4) est solidaire d'un élément de renvoi (R) relié aux moyens de commande de la boîte de vitesses actionnée par le levier, ledit élément de renvoi étant accouplé à une partie de la boîte de vitesses pour le passage et la sélection des vitesses.

6. Dispositif selon la revendication 3, caractérisé en ce que les moyens sont constitués par les axes crantés (7) de commande des fourchettes correspondant au passage des vitesses, les crans (7a) des axes (7) coopérant avec un système de galets ou de billes (8) aptes à exercer un effort de pression réglable.

7. Dispositif selon la revendication 1, caractérisé en ce que l'ensemble d'assistance comprend en combinaison :

   - un moyen (1) apte à mesurer l'effort appliqué digitalement sur une partie du levier (L) et correspondant à la sélection et/ou au passage d'une vitesse,
   - un système (2) apte à délivrer un signal électrique proportionnel à l'effort appliqué, pour commander un organe actionneur (9) accouplé à au moins un élément de la chaîne cinématique de sélection et/ ou de passage des vitesses.

8. Dispositif selon la revendication 7, caractérisé en ce que le moyen de mesure de l'effort appliqué est constitué par un capteur de forces (1), disposé soit entre le pommeau du levier de commande (L) et l'organe actionneur (9).

9. Dispositif selon la revendication 7, caractérisé en ce que le système est constitué par un circuit amplificateur (2), alimenté par une source d'énergie électrique extérieure (3), et assujetti au capteur (1), le signal délivré par ledit circuit amplificateur étant appliqué à l'organe actionneur (9).

10. Dispositif selon la revendication 9, caractérisé en ce que l'organe actionneur (9) est relié entre le capteur (1) et la boîte de vitesses (BV)

11. Dispositif selon l'une quelconque des revendications 5 et 7, caractérisé en ce que l'actionneur (9) est accouplé par un système de transmission à un élément de renvoi (R) relié aux moyens de commande de la boîte de vitesses (BV) actionnés par le levier (L), ledit élément de renvoi (R) étant accouplé à une partie de la boîte pour le passage et/ou la sélection des vitesses.

FIG.1

EP 0 794 363 A1

# FIG.2

FIG.3

FIG.4

FIG.5

FIG.6

EP 0 794 363 A1

Office européen
des brevets

**RAPPORT DE RECHERCHE EUROPEENNE**

Numero de la demande

EP 97 42 0036

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 42 04 074 A (ZAHNRADFABRIK FRIEDRICHSHAFEN) * colonne 2, ligne 39 - ligne 64; figure * --- | 1,7-10 | F16H61/24 F16H61/32 |
| A | PATENT ABSTRACTS OF JAPAN vol. 008, no. 076 (M-288), 9 Avril 1984 & JP 58 221068 A (NISSAN JIDOSHA KK), 22 Décembre 1983, * abrégé * --- | 1,2,4,5 | |
| A | PATENT ABSTRACTS OF JAPAN vol. 011, no. 001 (M-550), 6 Janvier 1987 & JP 61 180049 A (NIPPON CABLE SYST INC), 12 Août 1986, * abrégé * --- | 1,3,6 | |
| A | DE 42 31 248 A (VOLKSWAGEN AG) * le document en entier * --- | 1 | |
| A | PATENT ABSTRACTS OF JAPAN vol. 015, no. 035 (M-1074), 28 Janvier 1991 & JP 02 275176 A (HINO MOTORS LTD), 9 Novembre 1990, * abrégé * ----- | 1 | DOMAINES TECHNIQUES RECHERCHES (Int.Cl.6) F16H B60K G05G |

Le présent rapport a été établi pour toutes les revendications

| Lieu de la recherche | Date d'achèvement de la recherche | Examinateur |
|---|---|---|
| LA HAYE | 9 Juin 1997 | Topp, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)